# EUROPEAN PATENT SPECIFICATION

(11) **EP 0 603 252 B1**
(45) Date of publication and mention of the grant of the patent: **27.03.1996**
(21) Application number: 92919132.8
(22) Date of filing: 11.09.1992
(51) Int. Cl.: B62B 1/12

(54) **COLLAPSIBLE TROLLEY FOR LUGGAGE**
FALTBARER GEPÄCKWAGEN
CHARIOT A BAGAGES PLIABLE

(30) Priority: 13.09.1991 GB 9119621
(43) Date of publication of application: 29.06.1994
(73) Proprietor: UNITED SYSTEM LIMITED, Tsimshatsui, Kowloon (HK)
(72) Inventor: LÖWENSTEIN, Frank, Tsimshatsui, Kowloon (HK)
(74) Representative: Higgins, Michael Roger
(86) International application number: GB9201670
(87) International publication number: WO9305993

(56) References cited:
- DE-U- 8 914 095
- DE-U- 9 014 174
- FR-A- 2 474 425
- FR-A- 2 491 420
- FR-A- 2 632 262
- US-A- 2 890 060
- US-A- 5 035 437

## Description

The present invention relates to a collapsible trolley for luggage or the like.

DE-U-8 914 095 shows a trolley having the features set forth in the pre-characterising part of claim 1. The trolley of DE-U-8 914 095 has a pair of castors on each arm, the arms being kept horizontal as the trolley is manoeuvred.

According to the invention there is provided a collapsible trolley for luggage, which trolley comprises an elongate body having an upper end and a lower end, a handle provided at the upper end of the body, a pair of pivotable legs adjacent the lower end of the body, the legs being movable relative to the body between a position in which they lie substantially alongside the body and a position in which the free ends of the legs fan out from the body, and a pair of arms each being pivotably mounted to the end of a respective leg and movable between a stored position where the arm lies substantially alongside the respective leg and an operable position substantially at right angles to a plane co-incident with the legs and the elongate body, in which position the arms are able to support luggage when the trolley is tilted during use characterised in that each arm is provided with a wheel which protrudes from the end thereof adjacent to the leg such that when the arms are in their operable position and the trolley is tilted, the arms are also tilted and luggage carried thereon is supported by the wheels.

Each arm may be pivotably mounted to each respective leg about an axis adjacent to but not coincident with the axis of rotation of the respective wheel such that in use when the arm is a right angles to the elongate body the wheels support the lower end of the body above the ground when the upper end is against the ground.

The leading edges of the arms are preferably adapted to rest on the ground when the arms are at right angles to the elongate body for loading and unloading the trolley and in which the wheels are supported by the arm such that their peripheries are in line with the leading edges or raised to some extent off the ground.

The axes of rotation of the wheels may be off-set with one another when the legs are substantially alongside the elongate body and coincide with each other when the legs are fanned out.

The legs may be hinged to a sleeve which is slidable along the body.

Each leg may be connected to the body by one or more a struts, the ends of which are hinged or adjustably connected to the leg and to the body. The one or more struts may comprise telescopic arrangements.

Locking means may be provided for locking the legs and arms in a position lying substantially alongside the body. The locking means may comprise co-operable engagement members provided on each arm and on the body, respectively, one of said engagement members being resiliently biassed to an engaging position with the other engagement member.

The legs may be resiliently biassed to fan out by spring means. The spring means may be connected to move the sleeve along the body in order to bias the legs to fan out.

The invention will now be more particularly described, by way of example, with reference to the accompanying drawings, in which:
Figure 1 is a front perspective view of an embodiment of a collapsible trolley for luggage, according to the invention, said trolley being in a fully extended position;
Figure 2 is a rear view of the collapsible trolley of Figure 1;
Figure 3 is a bottom view of the collapsible trolley of Figure 1;
Figure 4 is a front view of the collapsible trolley of Figure 1, showing the manner in which the trolley is collapsed;
Figure 5 is a side view of the collapsible trolley of Figure 1, showing the manner in which the trolley is collapsed;
Figure 6 is a perspective view of the collapsible trolley of Figure 1, in a partially collapsed position; and
Figure 7 is a perspective view of the collapsible trolley of Figure 1, in a fully collapsed position.

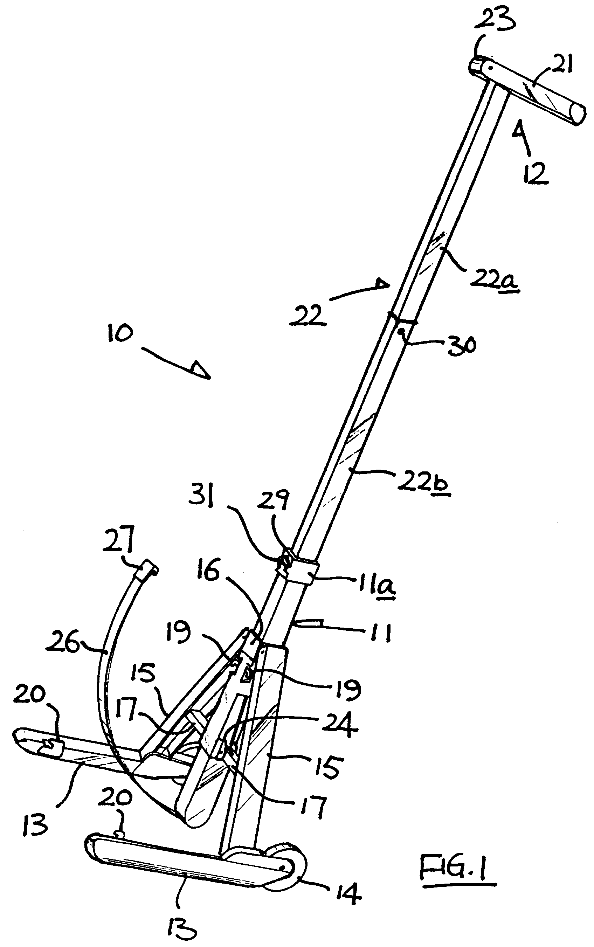

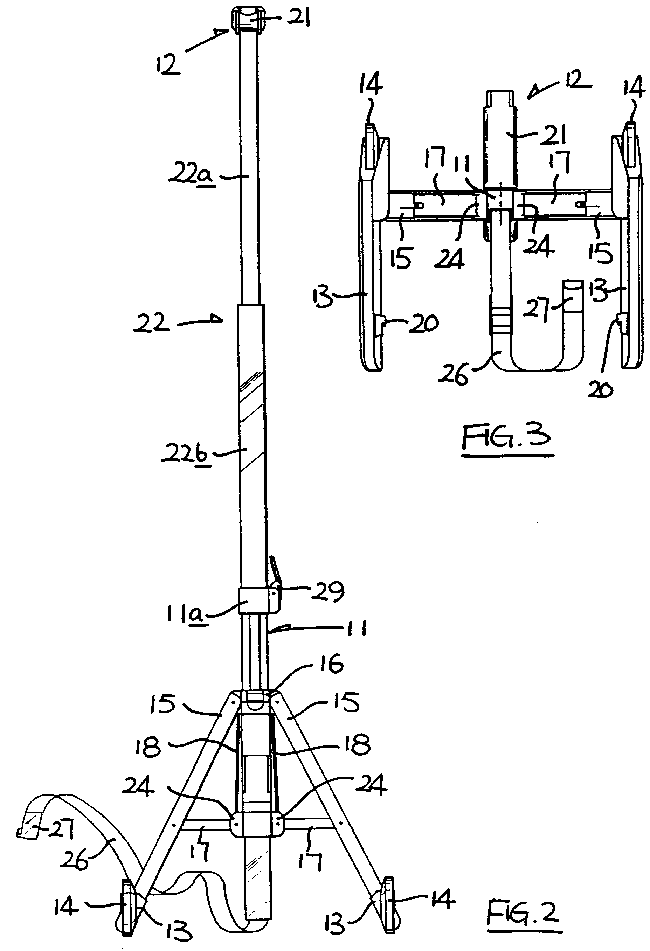

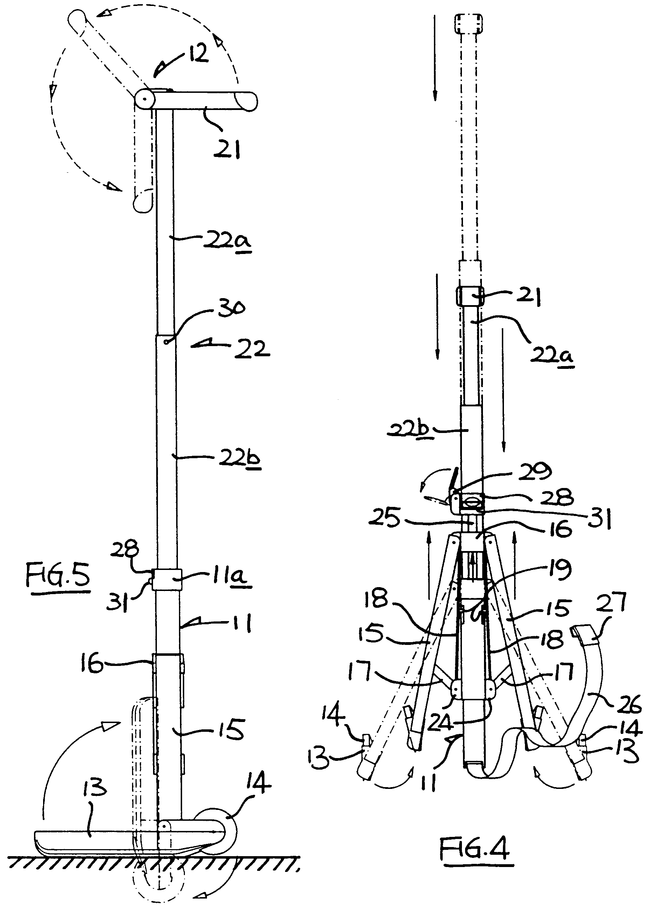

Referring firstly to Figures 1 to 3 of the drawings, there is shown an embodiment of a collapsible trolley 10 for luggage, in a fully extended position. The trolley 10 comprises a elongate hollow body 11, a handle 12 provided upstanding from an upper end of the body 11, and a pair of elongate arms 13 provided at a lower end of the body 11. A pair of wheels 14 are mounted at the rear ends of the respective arms 13. It is clear that the wheels 14 will, in use, be moved apart or together by and with the arms 13.

The arms 13 are connected to opposite sides of the body 11 by means of respective connecting legs 15. The legs 15 are hinged at their upper ends to a sleeve 16 which is slidable along the upper end of the body 11. Each leg 15 is further connected to the body 11 by a strut 17. One end of each strut 17 is hinged to the body 11 by means of a bracket 24 and the other end thereof is hinged to and within the corresponding leg 15. For extra strength, two or more struts 17 may be provided in the form of telescopic arrangements, say, and control and allow the relative movement of the legs 15 as required.

The arm 13 locks against further opening movement in the position shown in Figure 1, when at right angles to the elongate body 11, and it will be noted that as the arms 13 pivot about an axes which are not coincident with the rotational axes of the wheels 14, the wheels will always hold the body 11 and legs 15 off the ground. This remains the case even if the wheels 14 have small diameters. Thus, the arrangement allows small wheels to be used for the trolley while ensuring good ground clearance in use. The arms 13 being pivoted intermediate their lengths provides stronger and single member hinged structures and enable the wheels 14 to be secured and firmly held relative to the body 11 when carrying luggage on the trolley.

As best shown in Figures 4 and 5, the arrangement is such that the sleeve 16 will be slid upwards along the body 11 when the legs 15 are pivoted onto the body 11. Each leg 15 has a C-shaped channel cross-section, and the corresponding strut 17 is arranged to lie wholly within the leg 15 when the latter is pivoted onto the body 11. It is appreciated that with the use of the sleeve 16, the two legs 15 are pivotable in unison in opposite directions even when force is applied to only one of them.

The sleeve 16 is resiliently biassed downwards by two springs 18 connected between the sleeve 16 and the corresponding hinging brackets 24 on opposite sides of the body 11, resulting in the legs 15 being maintained under bias in the fully extended or fanning out position.

Each arm 13 is hinged, at a position immediately in front of the corresponding wheel 14, to the lower free end of the corresponding leg 15 about an axis transverse to the hinge axis between each leg 15 and the body 11.

For storage purpose, the legs 15 are pivoted to lie alongside opposite sides of the body 11 and the arms 13 are pivoted to lie alongside the respective legs 15 and hence the body 11 in order to form a compact configuration. Co-operable engagement formations 19 and 20 are provided on the body 11 and each arm 13 for locking the arms 13 and the legs 15 in this folded position. The engagement formations 19 are in the form of movable tongs 19 extending transversely in opposite directions, and the engagement formations 20 are rigid hooks 20 attached to the inner sides of the corresponding arms 13. The relative position of the engagement formations 19 and 20 is designed such that each hook 20 will come into engagement with the corresponding tong 19 when the associated arm 13 is folded up against the respective leg 15 after the latter is folded against the body 11.

The tongs 19 are resiliently biassed by a spring (not shown) provided within the body 11, into engagement with the co-operating hooks 20, and are manually releasable from such engagement by means of a knob 28 provided at an uppermost end 11a of the body 11. The knob 28 is mechanically associated with the tongs 19 through the use of a slidable strip 25 (see Figure 4). In use, the knob 28 is slid upwards in order to release the arms 13 from the body 11, resulting in the legs 15 fanning out automatically under the action of the springs 18 acted upon the sleeve 16. The arms 13 pivot downwards automatically upon release from the corresponding legs 15 through approximately 90 degrees for luggage to be loaded thereon.

The handle 12 is provided by a handle bar 21 connected to the upper end of the body 11 by a shaft 22. The uppermost end of the shaft 22 bends forwards to form a short limb 23 at which the handle bar 21 is hinged. The handle bar 21 is in use pivoted backwards to extend in a direction opposite to that of the limb 23.

The shaft 22 has two sections 22a and 22b which, together with the hollow body 11, form a telescopic arrangement such that the whole shaft 22 can be retracted into the body 11. In the fully extended position, the two shaft sections 22a and 22b are locked against each other by means of a self-engaging self-releasing snapping projection 30, whereas the lower shaft section 22b is releasably engageable with the upper end of the body 11 by means of a pivotable cam 29 provided on and passing through the uppermost end 11a of the body 11.

The trolley 10 includes a luggage-fastening elastic strap 26 connected at one end to the lowermost end of the body 11. The free end of the strap 26 has a hook 27 which, after the strap 26 has been placed round luggage loaded on the trolley 10, is to be brought into engagement with a bar 31 provided on the uppermost end 11a of the body 11.

As best shown in Figure 5, the leading edges (bottom edges in the Figure) of the arms 13 are flat so as to sit firmly on the ground, and the wheels 14 are arranged to be out of contact with the ground, but could be arranged to be just touching the ground. Thus, when the trolley 10 is standing on the ground in its upright position there is no tendency for the trolley to move and no strain on the wheels.

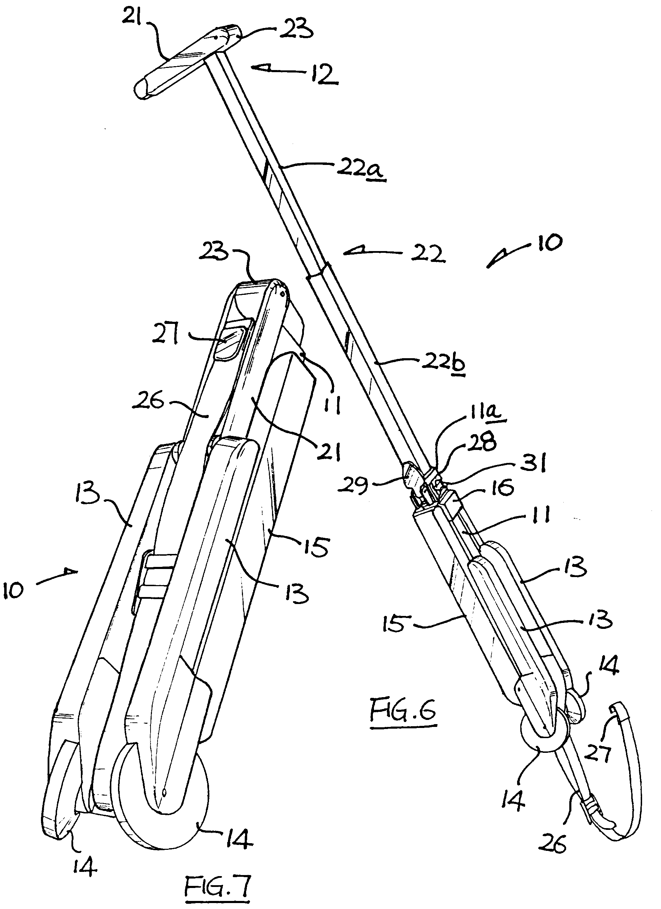

Reference is now also made to Figures 6 and 7 of the drawings. In order to collapse the trolley 10 from the fully extended condition shown in Figure 1, the legs 15 are firstly folded against the body 11, as described above. After having been brought together by the corresponding legs 15, the arms 13 are then folded up until the hooks 20 engage with the corresponding tongs 19, thereby bringing the trolley 10 into a partially collapsed condition as shown in Figure 6. Subsequently, the shaft 22 is retracted into the body 11, and the handle bar 21 is rotated forwards over until it bears against the body 11. The hook 27 of the strap 26 is finally brought into engagement with an inner end of the handle bar 21 in order to hold the handle bar 21 and in turn the upper shaft section 22a in position. The trolley 10 is hence in the fully collapsed condition, as shown in Figure 7, for storage or transportation.

In order to open up the trolley 10, the procedures just described above are repeated, essentially, but in the reverse order.

It will be appreciated that the axes of rotation of the wheels 14 are off-set with one another when the legs 15 are lying alongside the body 11 and coincide with each other when the legs 15 are fanned out for smooth trolley movement.

## Claims

1. A collapsible trolley for luggage, which trolley (10) comprises an elongate body (11) having an upper end and a lower end, a handle (12) provided at the upper end of the body (11), a pair of pivotable legs (15) adjacent the lower end of the body (11), the legs (15) being movable relative to the body (11) between a position in which they lie substantially alongside the body (11) and a position in which the free ends of the legs (15) fan out from the body (11), and a pair of arms (13) each being pivotably mounted to the end of a respective leg (15) and movable between a stored position where the arm (13) lies substantially alongside the respective leg (15) and an operable position substantially at right angles to a plane coincident with the legs (15) and the elongate body (11), in which position the arms (13) are able to support luggage when the trolley (10) is tilted during use characterised in that each arm (13) is provided with a wheel (14) which protrudes from the end thereof adjacent to the leg (15) such that when the arms (13) are in their operable position and the trolley (10) is tilted, the arms (17) are also tilted and luggage carried thereon is supported by the wheels (14).

2. A collapsible trolley according to claim 1, characterised in that the wheels (14) at the end of the arms (13) are positioned such that when the trolley (10) is in its upright position, luggage carried thereon is supported substantially only by the arms (18).

3. A collapsible trolley according to claim 1 or claim 2, characterised in that the axes of rotation of the wheels (14) are off-set with one another when the legs (15) are substantially alongside the elongate body (11) but coincide with each other when the legs (15) are fanned out and the arms (13) are in their operable position.

4. A collapsible trolley according to any preceding claim, characterised in that the legs (15) are hinged to a sleeve (16) which is slidable along the body (11) to permit the legs to fan out.

5. A collapsible trolley according to claim 4, characterised in that spring means (18) are provided to move the sleeve (16) along the body (11) in order to bias the legs (15) to fan out.

6. A collapsible trolley according to any preceding claim, characterised in that the elongate body (11) is telescopic.

## Patentansprüche

1. Zusammenklappbare Gepäckkarre, wobei die Karre (10) folgende Komponenten aufweist: ein längliches Gestell (11), das ein oberes Ende und ein unteres Ende hat, einen Griff (12), der am oberen Ende des Gestells (11) vorhanden ist, ein Paar gelenkig aufgehängter Beine (15) in der Nähe des unteren Endes des Gestells (11), wobei die Beine (15) im Verhältnis zu dem Gestell (11) zwischen einer Position, in der sie im wesentlichen längs des Gestells (11) liegen, und einer Position, in der die freien Enden der Beine (15) fächerartig von dem Gestell (11) weg ausgestellt werden, bewegt werden können, und ein Paar Arme (13), die jeweils gelenkig an dem Ende eines entsprechenden Beins (15) angebracht sind und zwischen einer Aufbewahrungsposition, in welcher der Arm (13) im wesentlichen längs des entsprechenden Beins (15) liegt, und einer Benutzungsposition bewegt werden kann, die im wesentlichen im rechten Winkel zu einer Ebene liegt, die sich mit den Beinen (15) und dem länglichen Gestell (11) deckt, wobei die Arme (13) in dieser Position in der Lage sind, Gepäck zu tragen, wenn die Karre (10) während der Nutzung angekippt wird, dadurch gekennzeichnet, daß jeder Arm (13) mit einem Rad (14) versehen ist, das von dessen in der Nähe des Beines (15) liegendem Ende vorsteht, so daß auch die Arme (13) angekippt sind und das darauf transportierte Gepäck durch die Räder (14) getragen wird, wenn sich die Arme (13) in der Benutzungsposition befinden und die Karre (10) angekippt ist.

2. Zusammenklappbare Karre nach Anspruch 1, dadurch gekennzeichnet, daß die Räder (14) an den Enden der Arme (13) so positioniert sind, daß das auf der Karre (10) transportierte Gepäck, wenn sich diese in ihrer aufrechten Position befindet, im wesentlichen nur von den Armen (13) getragen wird.

3. Zusammenklappbare Karre nach Anspruch 1 oder Anspruch 2, dadurch gekennzeichnet, daß die Rotationsachsen der Räder (14) gegeneinander versetzt sind, wenn sich die Beine (15) im wesentlichen längs des länglichen Gestells (11) befinden, daß sie aber miteinander übereinstimmen, wenn die Beine (15) fächerartig ausgestellt sind und sich die Arme (13) in der Benutzungsposition befinden.

4. Zusammenklappbare Karre nach einem der vorhergehenden Ansprüche, dadurch gekennzeichnet, daß die Beine (15) gelenkig an einer Buchse (16) befestigt sind, die längs des Gestells (11) gleiten kann, um das fächerartige Ausstellen der Beine zu ermöglichen.

5. Zusammenklappbare Karre nach Anspruch 4, dadurch gekennzeichnet, daß Federmittel (18) vorhanden sind, um die Buchse (16) längs des Gestells (11) zu bewegen, um die Beine (15) zum fächerartigen Ausstellen in eine einseitige Neigung zu bringen.

6. Zusammenklappbare Karre nach einem der vorhergehenden Ansprüche, dadurch gekennzeichnet, daß das längliche Gestell (11) zusammenschiebbar ist.

## Revendications

1. Chariot pliable pour bagages, le chariot (10) comprenant un corps allongé (11) avec une extrémité supérieure et une extrémité inférieure, une poignée (12) agencée au niveau de l'extrémité supérieure du corps (11), une paire de branches pivotantes (15) près de l'extrémité inférieure du corps (11), les branches (15) pouvant être déplacées par rapport au corps (11), entre une position dans laquelle elles sont placées pratiquement le long du corps (11) et une position dans laquelle les extrémités libres des branches (15) se déploient à partir du corps (11), et une paire de bras (13), monté chacun par pivotement sur l'extrémité d'une branche respective (15) et pouvant être déplacé entre une position de rangement, le bras (13) étant placé pratiquement le long de la branche respective (15) et une position de service, pratiquement à des angles droits par rapport à un plan coïncident avec les branches (15) et le corps allongé (11), les bras (13) étant dans cette position capables de supporter des bagages lorsque le chariot (10) est incliné en service, caractérisé en ce que chaque bras (13) comporte une roue (14) débordant de l'extrémité correspondante, adjacente à la branche (15), de sorte que lorsque les bras (13) se trouvent dans leur position de service, le chariot (10) étant incliné, les bras (13) sont également inclinés, les bagages qui y sont transportés étant supportés par les roues (14).

2. Chariot pliable selon la revendication 1, caractérisé en ce que les roues (14) au niveau de l'extrémité des bras (13) sont positionnées de sorte que lorsque le chariot (10) se trouve dans sa position droite, les bagages qui y sont transportés sont supportés pratiquement par les seuls bras (13).

3. Chariot pliable selon les revendications 1 ou 2, caractérisé en ce que les axes de rotation des roues (14) sont décalés l'un par rapport à l'autre lorsque les branches (15) sont placées pratiquement le long du corps allongé (11), mais coïncident l'un avec l'autre lorsque les branches (15) sont déployées, les bras (13) se trouvant dans leur position de service.

4. Chariot pliable selon l'une quelconque des revendications précédentes, caractérisé en ce que les branches (15) sont articulées à une douille (16) pouvant glisser le long du corps (11) pour permettre le déploiement des branches.

5. Chariot pliable selon la revendication 4, caractérisé en ce que des moyens de ressort (18) sont prévus pour déplacer la douille (16) le long du corps (11), pour exercer une poussée sur les branches (15) en vue de leur déploiement.

6. Chariot pliable selon l'une quelconque des revendications précédentes, caractérisé en ce que le corps allongé (11) est téléscopique.
